# EUROPEAN PATENT APPLICATION

(11) **EP 1 820 895 A2**
(43) Date of publication of application: **22.08.2007**
(21) Application number: 07250586.0
(22) Date of filing: 13.02.2007
(51) Int. Cl.: D06M 15/21, D06M 15/263, D06M 15/285, D06M 15/356, D21H 17/34, D21H 21/34

(54) **Treated articles and methods of making and using same**

(30) Priority: 21.02.2006 US 775065 P
(71) Applicant: Rohm and Haas Company, Philadelphia, PA 19106-2399 (US)
(72) Inventor: Cottrell, Stephanie N., Denver North Carolina 28037 (US); Kline, Debra A., Lansdale Pennsylvania 19446 (US); Lundquist, Eric G., North Wales Pennsylvania 19454 (US)
(74) Representative: Kent, Venetia Katherine

(57) **Abstract**

Treated articles and methods of making and using the same are disclosed. The treated articles comprise a substrate selected from a fiber, a textile, a non-woven and a paper treated with a treatment that imparts flame resistance to the substrate.

## Description

The present invention relates to treated article, comprising a substrate selected from a fiber, a textile, a non-woven and a paper, wherein at least a portion of a surface of the substrate is treated with a treatment that imparts the treated article with flame resistance. The present invention also relates to methods of making and using such treated articles.

A variety of materials are used for imparting flame resistance to textile and non-woven articles. The most widely used materials for this purpose are brominated diphenyl ethers used in combination with antimony oxide. These brominated materials offer excellent cost versus performance characteristics. Nevertheless, these brominated materials have come under recent scrutiny as potentially exhibiting hazards to health and the environment.

One alternative to treatment with halogenated materials proposed for imparting flame retardancy to textile and non-woven articles is treatment with aluminum trihydroxide and magnesium hydroxide. Such materials are reported to be effective at high loading levels (i.e., >50wt%). At these loading levels, however, such materials tend to adversely affect the hand and drape of the treated textile or non-woven article.

Another alternative to treatment with halogenated materials proposed for imparting flame retardancy to textile materials without substantially altering the feel of the treated material is disclosed by Chatelin et al. in U.S. Patent Number 5,281,239. Chatelin et al. disclose a treatment process for imparting flame retardancy to a textile material containing nitrogen atoms in its polymeric structure, which consists of grafting said material with a phosphoric acid ethylenic ester of the general formula 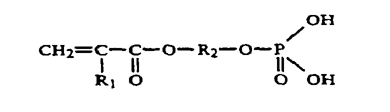 in which R₁ is selected from the group consisting of hydrogen and alkyls and R₂ is selected from the group consisting of alkylenes, alkylene oxides and polyalkylene oxides, the grafting rate being less than or equal to 20%.

Notwithstanding, there remains a need for new treatments for imparting substrates with flame resistance and methods of applying the same to fiber, textile, non-woven and paper substrates to impart flame retardancy thereto.

In one aspect of the present invention, there is provided a treated article, comprising: a substrate having a surface, wherein the substrate is selected from a fiber, a non-woven, a textile and a paper; and a treatment; wherein at least a portion of the surface is treated with the treatment; wherein the treatment comprises a phosphorus containing polymer; wherein the phosphorus containing polymer comprises > 10 wt% (based on solids) of phosphorus containing monomer derived units; with the proviso that the treatment contains > 10 wt% (based on solids) of phosphorus containing monomer derived units that are not derived from vinylphosphonic acid and with the proviso that the treated article contains at least 1wt% (based on solids) phosphorus.

In another aspect of the present invention, there is provided a treated article, comprising: a substrate having a surface, wherein the substrate is selected from a fiber, a non-woven, a textile and a paper; and a treatment; wherein at least a portion of the surface is treated with the treatment; wherein the treatment comprises a phosphorus containing polymer; wherein the phosphorus containing polymer comprises > 10 wt% (based on solids) of phosphorus containing monomer derived units; wherein the phosphorus containing monomer derived units are derived from monomers according to formula (I) and salts thereof, wherein formula (I) follows: 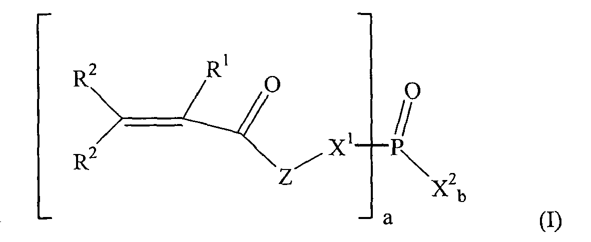 wherein **Z** is selected from O and NH; **R¹** is selected from a hydrogen, a hydrocarbyl group and a substituted hydrocarbyl group; each **R²** is independently selected from a hydrogen, a hydrocarbyl group and a substituted hydrocarbyl group; **X¹** is selected from an alkyl group; a substituted alkyl group; an alkenyl group; a substituted alkenyl group; an aryl group; a substituted aryl group and a -(**CR**¹₂)_{d}-O- group, where d is selected from 1, 2, 3 and 4; **X²** is selected from a hydrogen and a hydroxy group; **a** is selected from 1, 2 and 3; **b** is selected from 0, 1 and 2; and, wherein **a+b**=3; with the proviso that the treatment contains > 10 wt% (based on solids) of the phosphorus containing monomer derived units and with the proviso that the treated article contains at least 1 wt% (based on solids) phosphorus.

In another aspect of the present invention, there is provided an item comprising a treated article of the present invention, wherein the item is selected from apparel, apparel interlining, upholstery, carpeting, padding, ceiling tiles, acoustical tiles, backing, wall coverings, roofing products, wall board, house wraps, insulation, bedding, wiping cloths, towels, gloves, rugs, floor mats, drapery, napery, textile bags, awnings, vehicle covers, boat covers, tents, agricultural coverings, geotextiles, automotive headliners, air and fluid filtration media, dust masks, fiber fill, envelopes, tags, labels and medical care products.

In another aspect of the present invention, there is provided a process for producing a treated article comprising: providing a substrate, wherein the substrate is selected from a fiber, a non-woven, a textile and a paper; providing a treatment comprising a phosphorus containing polymer, wherein the phosphorus containing polymer comprises > 10 wt% (based on solids) of phosphorus containing monomer derived units; treating the substrate with the treatment to produce a treated article; optionally, curing the treatment; with the proviso that the treatment comprises at least 10 wt% (based on solids) phosphorus containing monomer derived units that are not derived from vinylphosphonic acid and with the proviso that the treated article contains at least 1wt% (based on solids) phosphorus.

The term "**fiber**" or "**textile fiber**" as used herein and in the appended claims refers to a unit of matter which is capable of being spun into a yarn or made into a fabric by bonding or by interlacing in a variety of ways including, for example, weaving, knitting, braiding, felting, twisting or webbing.

The term "**yarn**" as used herein and in the appended claims refers to a strand of textile fiber in a form suitable for weaving, knitting, braiding, felting, twisting, webbing or otherwise fabricating into a fabric.

The term **"fabric"** as used herein and in the appended claims refers to any material woven, non-woven, knitted, felted or otherwise produced from, or in combination with, any natural or manufactured fiber, yarn or substitute therefore.

The term "**alkyl**" as used herein and in the appended claims includes both straight chain, branched and cyclic alkyl groups.

The term **"alkenyl"** as used herein and in the appended claims includes both straight chain and branched chain alkenyl groups.

The term "**(meth)acrylates**" used herein and in the appended claims encompasses both methacrylates and acrylates.

The term "**coat weight**" as used herein and in the appended claims refers to the weight of the treatment divided by the total weight of the treated article.

The term "**phosphorus containing monomers**" as used herein and in the appended claims refers to monomers that contain at least one ethylenic unsaturation and at least one -P=O group.

The term "**phosphorus containing monomer derived units**" as used herein and in the appended claims refers to part of a polymer chain derived from a **phosphorus containing monomer**.

The term **"glass transition temperature"** or **"T_{g}"** as used herein, means the temperature at or above which a glassy polymer undergoes segmental motion of the polymer chain. Glass transition temperatures of a polymer are estimated by the Fox equation *[*Bulletin of the American Physical Society1, 3 Page 123 (1956)], as follows: 1/T_{g}= w₁/T_{g(1)} + w₂/T_{g(2)}For a copolymer, w₁ and w₂ are the weight fraction of the two co-monomers, and T_{g(1)} and T_{g(2)} are the glass transition temperatures, in degrees Kelvin, of the two corresponding homopolymers. For polymers containing three or more monomers, additional terms (wₙ/T_{g(n)}) are added. Alternatively, the T_{g} of a polymer phase is calculated by using the appropriate values for the glass transition temperatures of homopolymers, which are found, for example, in "Polymer Handbook", edited by J. Brandrup and E. H. Immergut, Interscience Publishers. The values of T_{g} reported herein are calculated based on the Fox equation.

In some embodiments of the present invention, the treated article comprises a substrate having a surface, wherein the substrate is selected from a fiber, a non-woven, a textile and a paper. In some aspects of these embodiments, the substrate is selected from a fiber, a non-woven and a textile. In some aspects of these embodiments, the substrate is selected from a non-woven and a textile. In some aspects of these embodiments, the substrate is a non-woven. In some aspects of these embodiments, the substrate is a fiber. In some aspects of these embodiments, the substrate is a textile. In some aspects of these embodiments, the substrate is a paper.

In some embodiments of the present invention, the treated article comprises a substrate having a surface, wherein the substrate comprises fibers selected from natural fibers, synthetic fibers, inorganic fibers, combinations and blends thereof. In some aspects of these embodiments, the fibers may be of any denier; may be multi- or mono-filaments; may be false twisted or twisted; may incorporate multiple denier filaments into a single yarn through twisting and/or melting; and may be multi-component fibers exhibiting any type of cross-section, including, for example, sheath/core configurations, side by side configurations, pie wedge configurations, segmented ribon configurations, segmented cross configurations, tipped trilobal configurations and conjugate configurations. In some aspects of these embodiments, the fibers comprise natural fibers selected from silk, cotton, wool, flax, fur, hair, cellulose, ramie, hemp, linen, wood pulp and combinations thereof. In some aspects of these embodiments, the fibers comprise synthetic fibers selected from polyolefins, such as polyethylene, polypropylene and polybutylene; halogenated polymers, such as polyvinyl chloride; polyaramids, such as poly-p-phenyleneteraphthalamid (e.g. Kevlar® fibers available from DuPont), poly-m-phenyleneteraphthalamid (e.g., Nomex® fibers available from DuPont); melamine and melamine derivatives (e.g., Basofil® fibers available from Basofil Fibers, LLC); polyesters, such as polyethylene terephthalate, polyester/polyethers; polyamides, such as Nylon-6 and Nylon-6,6; polyurethanes, such as Tecophilic® aliphatic thermoplastic polyurethanes available from Noveon; acetates; rayon acrylics; and combinations thereof. In some aspects of these embodiments, the fibers comprise inorganic fibers selected from fiberglass, boron fibers and rock wool. In some aspects of these embodiments, the fibers comprise at least one of Nylon-6; Nylon-6,6; polypropylene and polyethylene terephthalate.

In some embodiments of the present invention, treated article comprises a treatment, wherein the treatment comprises a phosphorus containing polymer, wherein the phosphorus containing polymer comprises > 10 wt% (based on solids) of phosphorus containing monomer derived units, with the proviso that the treatment contains > 10 wt% (based on solids) of phosphorus containing monomer derived units that are not derived from vinylphosphonic acid and with the proviso that the treated article contains at least 1 wt% (based on solids) phosphorus. In some aspects of these embodiments, the phosphorus containing polymer comprises > 10 to 100 wt% (based on solids) of phosphorus containing monomer derived units. In some aspects of these embodiments, the phosphorus containing polymer comprises 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units. In some aspects of these embodiments, the treated article contains at least 1.25 wt%, alternatively at least 1.5 wt%, alternatively at least 1.75 wt%, alternatively at least 2.0 wt%, alternatively at least 2.5 wt%, alternatively at least 3.0 wt%, alternatively at least 3.5 wt% (based on solids) phosphorus.

In some embodiments of the present invention, the treatment comprises a phosphorus containing polymer, wherein the phosphorus containing polymer comprises > 10 wt%, alternatively > 10 to 100 wt%, alternatively 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units; wherein the phosphorus containing monomer derived units are derived from monomers according to formula (I) and salts thereof, wherein formula (I) follows: 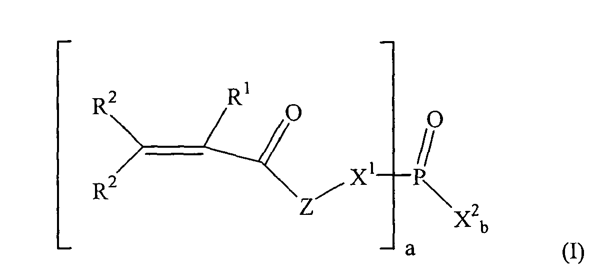 wherein **Z** is selected from O and NH; **alternatively Z** is O; **R¹** is selected from a hydrogen, a hydrocarbyl group and a substituted hydrocarbyl group; **alternatively R¹** is selected from a hydrogen, an alkyl group, a substituted alkyl group, an alkenyl group, a substituted alkenyl group, an aryl group and a substituted aryl group; **alternatively R¹** is selected from a hydrogen and a methyl group, **alternatively R¹** is a hydrogen; each **R²** is independently selected from a hydrogen, a hydrocarbyl group and a substituted hydrocarbyl group; **alternatively** each **R²** is independently selected from a hydrogen, an alkyl group, a substituted alkyl group, an alkenyl group, a substituted alkenyl group, an aryl group and a substituted aryl group; **alternatively** each **R²** is independently selected from a hydrogen and a -CO₂**R³** group, where **R³** is selected from a hydrogen, an alkyl group, a substituted alkyl group, an alkenyl group, a substituted alkeny group, an aryl group and a substituted aryl group; **X¹** is selected from an alkyl group; a substituted alkyl group; an alkenyl group; a substituted alkenyl group; an aryl group; a substituted aryl group and a -(**CR**¹₂)_{d}-O- group, where d is selected from 1, 2, 3 and 4; **alternatively X¹** is selected from a C₁₋₄ alkyl group, a -(CH₂)-O- group, a -(CH₂)₂-O- group and a -(CH₂)₃-O- group;
**X²** is selected from a hydrogen and a hydroxy group; **a** is selected from 1, 2 and 3;
**b** is selected from 0, 1 and 2; and, wherein **a+b**=3; with the proviso that the treatment contains > 10 wt% (based on solids) of the phosphorus containing monomer derived units and with the proviso that the treated article contains at least 1wt%, alternatively at least 1.25 wt%, alternatively at least 1.5 wt%, alternatively at least 1.75 wt%, alternatively at least 2.0 wt%, alternatively at least 2.5 wt%, alternatively at least 3.0 wt%, alternatively at least 3.5 wt% (based on solids) phosphorus.

In some embodiments of the present invention, the **phosphorus containing monomer derived units** are derived from monomers selected from mono-phosphate functional monomers according to formula (II) and salts thereof, wherein formula (II) is 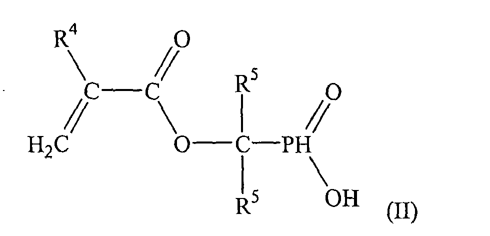 wherein **R⁴** is selected from a hydrogen and a methyl group and each occurrence of **R⁵** is independently selected from a hydrogen, a C₁₋₁₂ alkyl group, an aryl group, a substituted alkyl group and a substituted aryl group.

In some embodiments of the present invention, the treatment comprises a phosphorus containing polymer, wherein the phosphorus containing polymer comprises > 10 wt%, alternatively > 10 to 100 wt%, alternatively 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units, wherein the phosphorus containing monomer derived units are derived from monomers selected from allyl phosphate of bis(hydroxy-methyl) fumarate; allyl phosphate of bis(hydroxy-methyl) itaconate; mono-phosphate of bis(hydroxy-methyl) fumarate; mono-phosphate of bis(hydroxy-methyl) itaconate; di-phosphate of bis(hydroxy-methyl) fumarate; di-phosphate of bis(hydroxy-methyl) itaconate; and salts thereof. In some aspects of these embodiments, the treated article contains at least 1.25 wt%, alternatively at least 1.5 wt%, alternatively at least 1.75 wt%, alternatively at least 2.0 wt%, alternatively at least 2.5 wt%, alternatively at least 3.0 wt%, alternatively at least 3.5 wt% (based on solids) phosphorus.

In some embodiments of the present invention, the treatment comprises a phosphorus containing polymer, wherein the phosphorus containing polymer comprises > 10 wt%, alternatively > 10 to 100 wt%, alternatively 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units, wherein the **phosphorus containing monomer derived units** are derived from monomers selected from phosphates of (meth)acrylamides and salts thereof. In some aspects of these embodiments, the phosphorus containing monomer derived units are derived from monomers selected from 2-acrylamido-2-methylporpanephosphonic acid and 2-methacrylamido-2-methylpropanephosphonic acid. In some aspects of these embodiments, the treated article contains at least 1.25 wt%, alternatively at least 1.5 wt%, alternatively at least 1.75 wt%, alternatively at least 2.0 wt%, alternatively at least 2.5 wt%, alternatively at least 3.0 wt%, alternatively at least 3.5 wt% (based on solids) phosphorus.

In some embodiments of the present invention, the treatment comprises a phosphorus containing polymer, wherein the phosphorus containing polymer comprises > 10 wt%, alternatively > 10 to 100 wt%, alternatively 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units, wherein the **phosphorus containing monomer derived units** are derived from monomers selected from phosphates of hydroxyalkyl (meth)acrylates, (hydroxy)phosphinylmethyl (meth)acrylates and salts thereof. In some aspects of these embodiments, the monomers are selected from phosphates of 2-hydroxyethyl (meth)acrylate, phosphates of 3-hydroxypropyl (meth)acrylate and (hydroxy)phosphinylmethyl (meth)acrylate. In some aspects of these embodiments, the monomers are selected from 2-phosphoethyl (meth)acrylate, phosphoethyl di(meth)acrylate, 2-phosphopropyl (meth)acrylate, 3-phosphopropyl (meth)acrylate, and 3-phospho-2-hydroxypropyl (meth)acrylate. In some aspects of these embodiments, the monomers are selected from 2-phosphoethyl (meth)acrylate. In some aspects of these embodiments, the treated article contains at least 1.25 wt%, alternatively at least 1.5 wt%, alternatively at least 1.75 wt%, alternatively at least 2.0 wt%, alternatively at least 2.5 wt%, alternatively at least 3.0 wt%, alternatively at least 3.5 wt% (based on solids) phosphorus.

In some embodiments of the present invention, the **treated article** contains ≤ 5 wt% of vinyl phosphonic acid and vinyl phosphonic acid derived units. In some aspects of these embodiments, the treated article contains < 4wt%; alternatively <3wt%; alternatively <2wt%; alternatively <1 wt%; alternatively <0.5 wt%; alternatively <0.1 wt%; alternatively <0.05wt%; alternatively <0.01 wt%; alternatively < 0.001 wt% of vinyl phosphonic acid and vinyl phosphonic acid derived units.

In some embodiments of the present invention, the treated article comprises 1 to 99 wt% (based on solids) of the treatment. In some aspects of these embodiments, the treated article comprises 5 to 99 wt%, alternatively 10 to 90 wt%, alternatively 20 to 80 wt% (based on solids) of the treatment.

In some embodiments of the present invention, the treated article satisfies the burn resistance requirements set forth by the United States Department of Transportation National Highway Traffic Safety Administration Laboratory Test Procedure For FMVSS 302 Flammability of Interior Materials (TP-302-03; October 18, 1991).

In some embodiments of the present invention, the treated article is wash-durable.
The term "**wash-durable"** as used herein and in the appended claims means that the treated article contains ≥ 0.5 wt% phosphorus after being subjected to 5 washes performed according to AATCC Test Method 124-2001.

In some embodiments of the present invention, the phosphorus containing polymer has a T_{g} of-45 to 85°C; alternatively -30 to 60°C; alternatively -20 to 40°C.

In some embodiments of the present invention, the phosphorus containing polymer further comprises < 90 wt% (based on solids) of monomer units derived from non-phosphorus monomers selected from styrene; butadiene; α-methyl styrene; vinyl toluene; vinyl naphthalene; ethylene; propylene; vinyl acetate; vinyl versatate; vinyl chloride; vinylidene chloride; acrylonitrile; methacrylonitrile; (meth)acrylamides; methylol (meth)acrylamides; C₁-C₄₀alkyl esters of (meth)acrylic acid; other (meth)acrylates; alkoxyalkyl (meth)acrylates; mono-, di-, trialkyl esters of ethylenically unsaturated di- and tri-carboxylic acids and anhydrides; and other carboxylic acid containing monomers. In some aspects of these embodiments, the C₁-C₄₀ alkyl esters of (meth)acrylic acid include, for example, methyl (meth)acrylate, ethyl (meth)acrylate, n-butyl (meth)acrylate, 2-ethylhexyl (meth)acrylate, cyclohexyl (meth)acrylate, n-octyl (meth)acrylate, n-decyl (meth)acrylate, n-dodecyl (meth)acrylate, tetradecyl (meth)acrylate, lauryl (meth)acrylate, oleyl (meth)acrylate, palmityl (meth)acrylate and stearyl (meth)acrylate. In some aspects of these embodiments, the other (meth)acrylates include, for example, isobornyl (meth)acrylate, benzyl (meth)acrylate, phenyl (meth)acrylate, 2-bromoethyl (meth)acrylate, 2-phenylethyl (meth)acrylate and 1-naphthyl (meth)acrylate. In some aspects of these embodiments, the alkoxyalkyl (meth)acrylates such as ethoxyethyl (meth)acrylate, hydroxyalkyl(meth) acrylates include, for example, 2-hydroxyethyl (meth)acrylate and 3-hydroxypropyl (meth)acrylate. In some aspects of these embodiments, mono-, di-, tri-alkyl esters of ethylenically unsaturated di- and tri-carboxylic acids and anhydrides include, for example, ethyl maleate, dimethyl fumarate and ethyl methyl itaconate. In some embodiments of the present invention, the other carboxylic acid containing monomers include, for example, (meth)acrylic acid, itaconic acid, fumaric acid and maleic acid.

In some embodiments of the present invention, the phosphorus containing polymer further comprises < 90 wt% (based on solids) of monomer units derived from non-phosphorus containing monomers that include at least one multi-ethylenically unsaturated monomer effective to raise the molecular weight and crosslink the polymer particle. In some aspects of these embodiments, the at least one multi-ethylenically unsaturated monomer is selected from allyl (meth)acrylate; tripropylene glycol di(meth)acrylate; diethylene glycol di(meth)acrylate; ethylene glycol di(meth)acrylate; 1,6-hexanediol di(meth)acrylate; 1,3-butylene glycol di(meth)acrylate; polyalkylene glycol di(meth)acrylate; diallyl phthalate; trimethylolpropane tri(meth)acrylate; divinylbenzene; divinyltoluene; diethylene glycol divinylether; trivinylbenzene; divinyl naphthalene and combinations thereof.

In some embodiments of the present invention, the treatment further comprises at least one binder. In some aspects of these embodiments, the treatment comprises 0 to < 90 wt%, alternatively 10 to 70 wt%, alternatively 15 to < 90 wt%, alternatively 25 to < 90 wt%, alternatively 70 to < 90 wt% (based on solids) binder. In some aspects of these embodiments, the at least one binder is selected from a polyurethane binder, an acrylic binder, a polyvinyl acetate binder, an ethylene vinyl acetate binder, an ethylene vinyl chloride binder, a styrene butadiene rubber binder, a nitrile binder, a silicone binder, a polyvinyl alcohol binder, a phenolic binder, a thermoset binder, a polyvinyl chloride binder, a phenol formaldehyde binder, a melamine formaldehyde binder, an urea formaldehyde binder, a melamine urea binder, an isocyanate binder and an isocyanurate binder. In some aspects of these embodiments, the at least one binder is a cross linked binder containing a crosslinking agent selected from a methylol-acrylamide, an urea, a blocked isocyanate, an epoxy, a melamine-formaldehyde, an alkoxyalkylmelamine, a carbodiimide and combinations thereof. In some aspects of these embodiments, the at least one binder comprises at least one acrylic binder.

In some embodiments of the present invention, the treatment further comprises an additive. In some aspects of these embodiments, the additive is selected from accelerators (e.g., phosphorus-containing accelerators); emulsifiers; pigments; fillers; extenders (e.g., urea and carbohydrates such as cellulose and sugar); antimigration aids; curing agents; coalescents; surfactants (e.g., ionic surfactants, nonionic surfactants and zwitterionic surfactants); spreading agents; dust suppressing agents (e.g., mineral oil dust suppressing agents); biocides; plasticizers; organosilanes; antifoaming agents (e.g., dimethicones, silicone oils and ethoxylated nonionics); corrosion inhibitors (e.g., corrosion inhibitors effective at pH < 4, e.g., thioureas, oxalates and chromates); colorants; antistatic agents; lubricants; waxes; antioxidants; coupling agents (e.g., organo silicon oils available from Dow-Coming Corporation; A0700, A0750 and A0800 available from Petrarch Systems; A1160 available from Dow Chemical Corporation and Silquest^{™} A-187 available from GE Silicones--OSi Specialties); polymers; waterproofing agents (e.g., silicones and emulsion polymers, such as emulsion polymers containing, as copolymerized units, greater than 30wt%--based on the weight of the emulsion polymer solids--ethylenically unsaturated acrylic monomer containing a C₄ or greater alkyl group); wetting agents; lignin; flame retarders; antioxidants; rheology modifiers; brighteners; ultraviolet stabilizers; foaming agents and combinations thereof. In some aspects of these embodiments, the additive is selected from calcium carbonate, magnesium hydroxide, aluminum trihydroxide, silica, mica, nano sized inorganic materials, clays, zinc borates, brominated diphenyl ethers, urea, melamine, silanes, aminosilane, organophosphates, pigments, amines, ethanolamines and surfactants.

In some embodiments of the present invention, the treated article further comprises a coating, a printing, a colorant (e.g., poly(oxyalkylenated) colorants, as well as pigments, dyes and tints), an antistatic agent, a brightening compound, a nucleating agent, an antioxidant, an UV stabilizer, a filler, a permanent press finish, a softener, a lubricant, a curing accelerator, an anti-pilling agent, a reflective coating, an opacifier, a flame retardant, an anti-blocking agent and combinations thereof. In some aspects of these embodiments, the treated article further comprises a soil release agent which improves wettability and washability of the treated article. In some aspects of these embodiments, the treated article further comprises a water proofing material. In some aspects of these embodiments, the water proofing material is selected from water repellent fluorocarbons and their derivatives, silicones, waxes and combinations thereof.

In some embodiments of the present invention, the process for producing the treated article comprises: providing a substrate, wherein the substrate is selected from a fiber, a non-woven, a textile and a paper. In some aspects of these embodiments, the substrate is selected from a fiber, a non-woven and a textile. In some aspects of these embodiments, the substrate is selected from a non-woven and a textile. In some aspects of these embodiments, the substrate is a non-woven. In some aspects of these embodiments, the substrate is a fiber. In some aspects of these embodiments, the substrate is a textile. In some aspects of these embodiments, the substrate is a paper.

In some embodiments of the present invention, the process for producing the treated article comprises: providing a substrate, wherein the substrate comprises fibers selected from natural fibers, synthetic fibers, inorganic fibers, combinations and blends thereof. In some aspects of these embodiments, the fibers may be of any denier; may be multi- or mono-filaments; may be false twisted or twisted; may incorporate multiple denier filaments into a single yarn through twisting and/or melting; and may be multicomponent fibers exhibiting any type of cross-section, including, for example, sheath/core configurations, side by side configurations, pie wedge configurations, segmented ribbon configurations, segmented cross configurations, tipped trilobal configurations and conjugate configurations. In some aspects of these embodiments, the fibers comprise natural fibers selected from silk, cotton, wool, flax, fur, hair, cellulose, ramie, hemp, linen, wood pulp and combinations thereof. In some aspects of these embodiments, the fibers comprise synthetic fibers selected from polyolefins, such as polyethylene, polypropylene and polybutylene; halogenated polymers, such as polyvinyl chloride; polyaramids, such as poly-p-phenyleneteraphthalamid (e.g. Kevlar® fibers available from DuPont), poly-m-phenyleneteraphthalamid (e.g., Nomex® fibers available from DuPont); melamine and melamine derivatives (e.g., Basofil® fibers available from Basofil Fibers, LLC); polyesters, such as polyethylene terephthalate; polyethers; polyamides, such as Nylon-6 and Nylon-6,6; polyurethanes, such as Tecophilic® aliphatic thermoplastic polyurethanes available from Noveon; acetates; rayon acrylics; and combinations thereof. In some aspects of these embodiments, the fibers comprise inorganic fibers selected from fiberglass, boron fibers and rock wool. In some aspects of these embodiments, the fibers comprise at least one of Nylon-6; Nylon-6,6; polypropylene and polyethylene terephthalate.

In some embodiments of the present invention, the process for producing the treated article comprises: providing a treatment comprising a phosphorus containing polymer, wherein the phosphorus containing polymer comprises > 10 wt% (based on solids) of phosphorus containing monomer derived units, with the proviso that the treatment contains > 10 wt% (based on solids) of phosphorus containing monomer derived units that are not derived from vinylphosphonic acid and with the proviso that the treated article contains at least 1 wt% (based on solids) phosphorus. In some aspects of these embodiments, the phosphorus containing polymer comprises > 10 to 100 wt% (based on solids) of phosphorus containing monomer derived units. In some aspects of these embodiments, the phosphorus containing polymer comprises 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units. In some aspects of these embodiments, the treated article contains at least 1.25 wt%, alternatively at least 1.5 wt%, alternatively at least 1.75 wt%, alternatively at least 2.0 wt%, alternatively at least 2.5 wt%, alternatively at least 3.0 wt%, alternatively at least 3.5 wt% (based on solids) phosphorus.

In some embodiments of the present invention, the process for preparing the treated article comprises: providing a treatment comprising a phosphorus containing polymer, wherein the phosphorus containing polymer comprises > 10 wt%, alternatively > 10 to 100 wt%, alternatively 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units; wherein the phosphorus containing monomer derived units are derived from monomers according to formula (I)are derived from monomers according to formula (I) and salts thereof, wherein formula (I) follows: 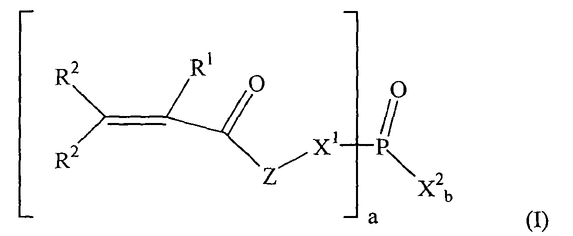 wherein **Z** is selected from O and NH; alternatively **Z** is O; **R¹** is selected from a hydrogen, a hydrocarbyl group and a substituted hydrocarbyl group; alternatively **R¹** is selected from a hydrogen, an alkyl group, a substituted alkyl group, an alkenyl group, a substituted alkenyl group, an aryl group and a substituted aryl group; alternatively **R¹** is selected from a hydrogen and a methyl group, alternatively **R¹** is a hydrogen; each **R²** is independently selected from a hydrogen, a hydrocarbyl group and a substituted hydrocarbyl group; alternatively each **R²** is independently selected from a hydrogen, an alkyl group, a substituted alkyl group, an alkenyl group, a substituted alkenyl group, an aryl group and a substituted aryl group; alternatively each **R²** is independently selected from a hydrogen and a -CO₂**R³** group, where **R³** is selected from a hydrogen, an alkyl group, a substituted alkyl group, an alkenyl group, a substituted alkenyl group, an aryl group and a substituted aryl group; **X¹** is selected from an alkyl group; a substituted alkyl group; an alkenyl group; a substituted alkenyl group; an aryl group; a substituted aryl group and a -(C**R**¹₂)_{d}-O- group, where d is selected from 1, 2, 3 and 4; alternatively **X²** is selected from a C₁₋₄ alkyl group, a -(CH₂)-O- group, a -(CH₂)₂-O- group and a -(CH₂)₃-O- group; **X²** is selected from a hydrogen and a hydroxy group; a is selected from 1, 2 and 3; **b** is selected from 0, 1 and 2; and, wherein **a+b**=3; with the proviso that the treatment contains > 10 wt% (based on solids) of the phosphorus containing monomer derived units and with the proviso that the treated article contains at least 1wt%, alternatively at least 1.25 wt%, alternatively at least 1.5 wt%, alternatively at least 1.75 wt%, alternatively at least 2.0 wt%, alternatively at least 2.5 wt%, alternatively at least 3.0 wt%, alternatively at least 3.5 wt% (based on solids) phosphorus.

In some embodiments of the present invention, the process for preparing the treated article comprises: providing a treatment comprising a phosphorus containing polymer, wherein the phosphorus containing polymer comprises > 10 wt%, alternatively > 10 to 100 wt%, alternatively 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units; wherein the phosphorus containing monomer derived units are derived from monomers selected from mono-phosphate functional monomers according to formula (II) and salts thereof, wherein formula (II) is 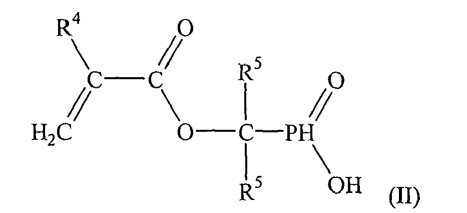 wherein **R⁴** is selected from a hydrogen and a methyl group and each occurrence of **R⁵** is independently selected from a hydrogen, a C₁₋₁₂ alkyl group, an aryl group, a substituted alkyl group and a substituted aryl group.

In some embodiments of the present invention, the process for preparing the treated article comprises: providing a treatment comprising a phosphorus containing polymer, wherein the phosphorus containing polymer comprises > 10 wt%, alternatively > 10 to 100 wt%, alternatively 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units; wherein the phosphorus containing monomer derived units are derived from monomers selected from allyl phosphate of bis(hydroxy-methyl) fumarate; allyl phosphate of bis(hydroxy-methyl) itaconate; mono-phosphate of bis(hydroxy-methyl) fumarate; mono-phosphate of bis(hydroxy-methyl) itaconate; di-phosphate of bis(hydroxy-methyl) fumarate; di-phosphate of bis(hydroxy-methyl) itaconate; and salts thereof.

In some embodiments of the present invention, the process for preparing the treated article comprises: providing a treatment comprising a phosphorus containing polymer, wherein the phosphorus containing polymer comprises > 10 wt%, alternatively > 10 to 100 wt%, alternatively 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units; wherein the phosphorus containing monomer derived units are derived from monomers selected from phosphates of (meth)acrylamides and salts thereof. In some aspects of these embodiments, the phosphorus containing monomer derived units are derived from monomers selected from 2-acrylamido-2-methylporpanephosphonic acid and 2-methacrylamido-2-methylpropanephosphonic acid.

In some embodiments of the present invention, the process for preparing the treated article comprises: providing a treatment comprising a phosphorus containing polymer, wherein the phosphorus containing polymer comprises > 10 wt%, alternatively > 10 to 100 wt%, alternatively 30 to 90 wt%, alternatively > 10 to 85 wt%, alternatively > 10 to 75 wt%, alternatively > 10 to 50 wt%, alternatively > 10 to 30 wt% (based on solids) of phosphorus containing monomer derived units; wherein the phosphorus containing monomer derived units are derived from monomers selected from phosphates of hydroxyalkyl (meth)acrylates, (hydroxy)phosphinylmethyl (meth)acrylates and salts thereof. In some aspects of these embodiments, the monomers are selected from phosphates of 2-hydroxyethyl (meth)acrylate, phosphates of 3-hydroxypropyl (meth)acrylate and (hydroxy)phosphinylmethyl (meth)acrylate. In some aspects of these embodiments, the monomers are selected from 2-phosphoethyl (meth)acrylate, phosphoethyl di(meth)acrylate, 2-phosphopropyl (meth)acrylate, 3-phosphopropyl (meth)acrylate, and 3-phospho-2-hydroxypropyl (meth)acrylate. In some aspects of these embodiments, the monomers are selected from 2-phosphoethyl (meth)acrylate.

In some embodiments of the present invention, treating the substrate with the treatment to produce a treated article comprises applying the treatment to at least a portion of the surface of the substrate using any suitable method. In some aspects of these embodiments, the treatment is applied to the substrate using a method selected from exhaustion, pad coating, screen coating, spray coating, roll coating, knife coating, foam coating, dip coating and combinations thereof. In some aspects of these embodiments, the treatment is applied to the substrate using a method selected from pad coating, spray coating, knife coating, roll coating and combinations thereof.

In some embodiments of the present invention, treating the substrate with the treatment to produce a treated article comprises incorporating the treatment into a carrier medium to facilitate treating the substrate with the treatment to produce a treated article. Suitable carrier mediums include liquids, solids, gases and combinations thereof. In some aspects of these embodiments, the treatment is incorporated into water as a carrier medium. In some aspects of these embodiments, the treatment is incorporated into a low molecular weight organic solvent as a carrier medium. In some aspects of these embodiments, the low molecular weight organic solvent is selected from ethanol, methanol, n-propanol, isopropanol and mixtures thereof. In some aspects of these embodiments, the treatment is incorporated into a mixture of one or more low molecular weight organic solvents and water as the carrier medium.

In some embodiments of the present invention, treating the substrate with the treatment to produce a treated article comprises applying the treatment to a surface of the substrate in a dry form. In some aspects of these embodiments, the treatment is applied to the substrate as a dry powder, a granule, a tablet, an encapsulated complex or a combination thereof.

In some embodiments of the present invention, the process for preparing the treated article further comprises: drying the treated article subsequent to treating the substrate with the treatment to produce a treated article. Optional drying of the treated article may serve to remove moisture and other volatile components therefrom. In some aspects of these embodiments, the treated article is dried using a technique selected from convection drying, contact drying, radiation drying and combinations thereof.

In some embodiments of the present invention, the process for preparing the treated article further comprises: curing the treatment subsequent to treating the substrate therewith. In some aspects of these embodiments, the treated article may be dried and cured. In some aspects of these embodiments, the treated article may be dried and cured in one process step or in two or more distinct process steps.

In some embodiments of the present invention, the treated articles may advantageously be used as or in a variety of items including, for example, apparel, apparel interlining, upholstery, carpeting, padding (e.g., shoddy pad), ceiling tiles, acoustical tiles, shoddy pad, backing, wall coverings, roofing products, house wraps, insulation, bedding, wiping cloths, towels, gloves, rugs, floor mats, drapery, napery, textile bags, awnings, vehicle covers, boat covers, tents, agricultural coverings, geotextiles, automotive headliners, filtration media, dust masks, fiber fill, envelopes, tags, labels, diapers, wound care products and medical care products (e.g., sterile wraps, caps, gowns, masks, drapings). In some aspects of these embodiments, the treated articles advantageously impart flame retardant properties to the item. In some aspects of these embodiments, the item is flame retardant as determined using will exhibit flame retardant behavior as measured using standardized tests.

Some embodiments of the present invention will now be described in detail in the following Examples.

### Example 1: (Comparative treatment w/o phosphorus containing polymer)

To a 3-liter, 4 necked flask equipped with a heating mantel, stirrer, nitrogen inlet and monomer feed line inlet was added 525 grams of deionized water, 6.25 grams of 23wt% branched sodium dodecyl benzene sulfonate solution in water (Polystep® A-16-22 available from Stepan) and 15 grams of itaconic acid. The flask contents were heated to 85°C with stirring. Upon reaching 85°C, a monomer emulsion containing 14 grams of deionized water, 0.05 grams of 23wt% branched sodium dodecyl benzene sulfonate solution in water (Polystep® A-16-22), 37.5 grams of butyl acrylate, 3 grams of styrene, 0.25 grams of acrylic acid and an initiator solution of 1.5 grams of ammonium persulfate in 12.5 grams of water was added to the flask. The flask contents were then maintained at 85°C for 10 minutes to create a polymer seed. A monomer emulsion containing 262 grams of deionized water, 1.75 grams of 23wt% branched sodium dodecyl benzene sulfonate solution in water (Polystep® A-16-22), 760 grams of butyl acrylate, 100 grams of styrene, and 25 grams of acrylic acid was then added to the flask at a rate of 4.4 g/min for a period of 20 minutes and then at a rate of 9.68 g/min for a period of 2.0 hours. A catalyst solution containing 1.0 grams of ammonium persulfate in 52.5 grams of water was added to the flask concurrently at a rate of 0.215 mL/min for a period of 20 minutes and then at a rate of 0.48 mL/min for a period of two hours. Once both feeds were complete, the flask contents were maintained at 85°C for 15 minutes. A second stage emulsion containing 96 grams of deionized water, 0.75 grams of 23wt% branched sodium dodecyl benzene sulfonate solution in water (Polystep® A-16-22), 90 grams of styrene, and 10 grams of acrylic acid was charged to the flask. The flask was then charged with a solution containing 3.25 grams of a 0.015 wt% iron sulfate solution, 0.9 grams of 70wt% t-butyl hydroperoxide dissolved in 15 grams of water and 0.5 grams of isoascorbic acid dissolved in 20 grams of water. The contents of the flask were then cooled to 65°C. The flask was then charged with 3.0 grams of 70wt% t-butyl hydroperoxide dissolved in 22.5 grams of water and 1.25 grams of isoascorbic acid dissolved in 87.5 grams of water over a period of 45 minutes. The contents of the flask were then cooled to room temperature and 21.5 grams of 28% ammonium hydroxide solution in 67.5 grams of water was added. The flask contents were then filtered through a 100 mesh nylon screen (Tyler equivalent 150 micron opening, ASTME 11 specification). The product filtrate yielded 45wt% solids with a T_{g} of -29°C.

### Example 2: (Treatment comprising phosphorus containing polymer with 7wt% phosphoethylmethacrylate monomer derived units)

To a 3-liter, 4 necked flask equipped with a heating mantel, stirrer, nitrogen inlet and monomer feed line inlet was added 525 grams of deionized water, 6.25 grams of 23wt% branched sodium dodecyl benzene sulfonate solution in water (Polystep® A-16-22 available from Stepan) and 15 grams of itaconic acid. The contents of the flask were then heated to 85°C with stirring. Upon reaching 85°C, a monomer emulsion containing 14 grams of deionized, 0.05 grams of 23wt% branched sodium dodecyl benzene sulfonate solution in water (Polystep® A-16-22), 39.0 grams of butyl acrylate, 3 grams of styrene, 0.25 grams of acrylic acid and an initiator solution of 1.5 grams of ammonium persulfate in 12.5 grams of water was charged to the flask. The contents of the flask were then maintained at 85°C for 10 minutes to create a polymer seed. A monomer emulsion containing 266 grams of deionized water, 1.74 grams of 23wt% branched sodium dodecyl benzene sulfonate solution in water (Polystep® A-16-22), 711 grams of butyl acrylate, 57 grams of styrene, 4.75 grams of acrylic acid, 12 grams of methylmethacrylate, and 70 grams of phosphoethylmethacrylate was added to the flask at a rate of 4.4 g/min for a period of 20 minutes and then at a rate of 9.68 g/min for a period of 2.0 hours. A catalyst solution containing 1.0 grams of ammonium persulfate in 52.5 grams of water was added to the flask concurrently at a rate of 0.215 mL/min for a period of 20 minutes and then at a rate of 0.481 mL/min for a period of 2.0 hours. Once feds were complete, the flask contents were held at 85°C for 15 minutes. A second stage emulsion containing 96 grams of deionized water, 0.75 grams of 23wt% branched sodium dodecyl benzene sulfonate solution in water (Polystep® A-16-22), 90 grams of styrene, and 10 grams of acrylic acid was charged to the flask. The flask was then charged with a solution containing 4 grams of a 0.015 % iron sulfate solution, 0.9 grams of 70% t-butyl hydroperoxide dissolved in 15 grams of water and 0.5 grams of isoascorbic acid dissolved in 20 grams of water. The flask contents were then cooled to 65°C. The flask was then charged with 3.0 grams of 70wt% t-butyl hydroperoxide dissolved in 22.5 grams of water and 1.25 grams of isoascorbic acid dissolved in 87.5 grams of water over a period of 45 minutes. The contents of the flask were then cooled to room temperature and 21.5 grams of 28% ammonium hydroxide solution in 67.5 grams of water was added. The flask contents where then filtered through a 100 mesh nylon screen (Tyler equivalent 150 micron opening, ASTME 11 specification). The product filtrate yielded 44wt% solids with a T_{g} of -29°C.

### Example 3: (Treatment comprising phosphorus containing polymer with 12wt% phosphoethylmethacrylate monomer derived units)

To a 3-liter, 4 necked flask equipped with a heating mantel, stirrer, nitrogen inlet and monomer feed line inlet was added 650 grams of deionized water, 6.25 grams of 23wt% branched sodium dodecyl benzene sulfonate solution in water (Polystep® A-16-22), and 15 grams of itaconic acid. The contents of the flask were then heated to 85°C with stirring. Upon reaching 85°C, a monomer emulsion containing 14.7 grams of deionized water, 0.1 grams of 23wt% branched sodium dodecyl benzene sulfonate solution in water (Polystep® A-16-22), 39.0 grams of butyl acrylate, 3.4 grams of styrene, 0.28 grams of acrylic acid and an initiator solution of 3.0 grams of ammonium persulfate in 12.5 grams of water was charged to the flask. The contents of the flask were maintained at 85°C for 10 minutes to create a polymer seed. A monomer emulsion containing 266 grams of deionized water, 1.65 grams of 23wt% branched sodium dodecyl benzene sulfonate solution in water (Polystep® A-16-22), 661 grams of butyl acrylate, 56.6 grams of styrene, 4.72 grams of acrylic acid, 21 grams of methylmethacrylate, and 120 grams of phosphoethylmethacrylate was then added to the flask at a rate of 4.4 g/min for a period of 20 minutes and then at a rate of 9.68 g/min for a period of 2.0 hours. A catalyst solution containing 1.0 grams of ammonium persulfate in 52.5 grams of water was added to the flask concurrently at a rate of 0.215 mL/min for a period of 20 minutes and then at a rate of 0.481 mL/min for a period of 2.0 hours. Once both feds were complete, the flask contents were maintained at 85°C for 15 minutes. A second stage emulsion containing 96 grams of deionized water, 0.75 grams of 23wt% branched sodium dodecyl benzene sulfonate solution in water (Polystep® A-16-22), 90 grams of styrene, and 10 grams of acrylic acid was charged to the flask. The flask was then charged with a solution containing 3.25 grams of a 0.015 % iron sulfate solution, 0.9 grams of 70% tert-butyl hydroperoxide dissolved in 15 grams of water and 0.5 grams of isoascorbic acid dissolved in 20 grams of water. The contents of the flask were then cooled to 65°C. The flask was then charged with 3.0 grams of 70wt% t-butyl hydroperoxide dissolved in 22.5 grams of water and 1.25 grams of isoascorbic acid dissolved in 87.5 grams of water over a period of 45 minutes. The contents of the flask were then cooled to room temperature and 21.5 grams of 28% ammonium hydroxide solution in 67.5 grams of water was added. The flask contents where then filtered through a 100 mesh nylon screen (Tyler equivalent 150 micron opening, ASTME 11 specification). The product filtrate yielded 43wt% solids with a T_{g} of -22°C.

### Example 4: (Treatment comprising phosphorus containing polymer with 20wt% phosphoethylmethacrylate monomer derived units)

To a 3-liter, 4 necked flask equipped with a heating mantel, stirrer, nitrogen inlet and monomer feed line inlet was added 525 grams of deionized water, 6.25 grams of 23wt% branched sodium dodecyl benzene sulfonate solution in water (Polystep® A-16-22), and 10 grams of itaconic acid. The contents of the flask were then heated to 85°C with stirring. Upon reaching 85°C, a monomer emulsion containing 14 grams of deionized water, 0.05 grams of 23wt% branched sodium dodecyl benzene sulfonate solution in water (Polystep® A-16-22), 35 grams of butyl acrylate, 5.0 grams of styrene, and an initiator solution of 3.0 grams of ammonium persulfate in 12.5 grams of water was added to the flask. The contents of the flask were then maintained at 85°C for 10 minutes to create a polymer seed. A monomer emulsion containing 245 grams of deionized water, 1.74 grams of 23wt% branched sodium dodecyl benzene sulfonate solution in water (Polystep® A-16-22), 645 grams of butyl acrylate, 9.5 grams of styrene, 35 grams of methylmethacrylate, and 200 grams of phosphoethylmethacrylate was then added to the flask at a rate of 4.4 g/min for a period of 20 minutes and then at a rate of 9.68 g/min for a period of 2.0 hours. A catalyst solution containing 1.0 grams of ammonium persulfate in 52.5 grams of water was added to the flask concurrently at a rate of 0.215 mL/min for a period of 20 minutes and then at a rate of 0.481 mL/min for a period of 2.0 hours. Once both feds were complete, the flask contents were maintained at 85°C for 15 minutes. A second stage emulsion containing 96 grams of deionized water, 0.75 grams of 23wt% branched sodium dodecyl benzene sulfonate solution in water (Polystep® A-16-22), 90 grams of styrene, and 10 grams of acrylic acid was then charged to the flask. The flask was then charged with a solution containing 4 grams of a 0.015 % iron sulfate solution, 0.9 grams of 70% t-butyl hydroperoxide dissolved in 15 grams of water and 0.5 grams of isoascorbic acid dissolved in 20 grams of water. The contents of the flask were then maintained at 65°C for 20 minutes. The contents of the flask were then cooled to room temperature and 21.5 grams of 28% ammonium hydroxide solution in 67.5 grams of water was added. The contents of the flask were then filtered a 100 mesh nylon screen (Tyler equivalent 150 micron opening, ASTME 11 specification). The product filtrate yielded 42wt% solids with a T_{g} of -27.5°C.

### Example 5: (Treatment comprising phosphorus containing polymer with 20wt% phosphoethylmethacrylate monomer derived units)

To a 3-liter, 4 necked flask equipped with a heating mantel, stirrer, nitrogen inlet and monomer feed line inlet was added 550 grams of deionized water and 3 grams of 30wt% sodium lauryl ether sulfate solution in water (Disponil® FES 32 IS available from Cognis). The contents of the flask were then heated to 85°C with stirring. Upon reaching 85°C, a solution of 1.8 grams of sodium carbonate in 20 grams of deionized water and a monomer emulsion containing 12.75 grams of deionized water, 0.85 grams of 30wt% sodium lauryl ether sulfate solution in water (Disponil® FES 32 IS available from Cognis), 10.2 grams of butyl acrylate, 9.3 grams of methyl methacrylate and an initiator solution of 1.5 grams of ammonium persulfate in 23.5 grams of water was then added to the flask. The contents of the flask were then maintained at 85°C for 10 minutes to create a polymer seed. Next, a monomer emulsion containing 287.25 grams of deionized water, 19.15 grams of 30wt% sodium lauryl ether sulfate solution in water (Disponil® FES 32 IS available from Cognis), 230 grams of butyl acrylate, 230 grams of methyl methacrylate and 120 grams of phosphoethylmethacrylate was then added to the flask at a rate of 6.7 g/min for a period of 10 minutes and then at a rate of 15 g/min for a period of 1.5 hours. Once feed was complete, the contents of the flask were then cooled to 65°C and a solution containing 4 grams of a 0.015 % iron sulfate solution, 0.9 grams of 70% tert-butyl hydroperoxide dissolved in 15 grams of water and 0.5 grams of isoascorbic acid dissolved in 20 grams of water was added to the flask. The contents of the flask were then maintained at 65°C for 20 minutes. The contents of the flask were then cooled to room temperature and 21.5 grams of 28% ammonium hydroxide solution was added. The contents of the flask were then filtered a 100 mesh nylon screen (Tyler equivalent 150 micron opening, ASTME 11 specification). The product filtrate yielded 38wt% solids with a T_{g} of 21.5°C.

### Example 6: (Treatment comprising phosphorus containing polymer with 30wt% phosphoethylmethacrylate monomer derived units)

To a 3-liter, 4 necked flask equipped with a heating mantel, stirrer, nitrogen inlet and monomer feed line inlet was added 550 grams of deionized water and 3 grams of 30wt% sodium lauryl ether sulfate solution in water (Disponil® FES 32 IS available from Cognis). The contents of the flask were then heated to 85°C with stirring. Upon reaching 85°C, a solution of 1.8 grams of sodium carbonate in 20 grams of deionized water and a monomer emulsion containing 12.75 grams of deionized water, 0.85 grams of 30wt% sodium lauryl ether sulfate solution in water (Disponil® FES 32 IS available from Cognis), 10 grams of butyl acrylate, 8.5 grams of methyl methacrylate and an initiator solution of 1.5 grams of ammonium persulfate in 23.5 grams of water was then added to the flask. The contents of the flask were then maintained at 85°C for 10 minutes to create a polymer seed. A monomer emulsion containing 287.25 grams of deionized water, 19.15 grams of 30wt% sodium lauryl ether sulfate solution in water (Disponil® FES 32 IS available from Cognis), 200 grams of butyl acrylate, 201 grams of methyl methacrylate and 180 grams of phosphoethylmethacrylate was then added to the flask at a rate of 6.7 g/min for a period of 10 minutes and then at a rate of 15 g/min for a period of 1.5 hours. Once feed was complete, the contents of the flask were cooled to 65°C and a solution containing 4 grams of a 0.015 %Fe Sulfate solution, 0.9 grams of 70% t butyl hydroperoxide dissolved in 15 grams of water and 0.5 grams of isoascorbic acid dissolved in 20 grams of water was added to the flask. The contents of the flask were then maintained at 65°C for 20 minutes. The flask contents were then cooled to room temperature and 21.5 grams of 28% ammonium hydroxide was added. The contents of the flask were then filtered a 100 mesh nylon screen (Tyler equivalent 150 micron opening, ASTME 11 specification). The product filtrate yielded 37wt% solids with a T_{g} of 26°C.

### Example 7: (Treatment comprising phosphorus containing polymer with 85wt% phosphoethylmethacrylate monomer derived units)

To a 1 liter, 4-necked flask equipped with a heating mantel, stirrer, nitrogen inlet, and monomer feed line inlet was added 200 grams of deionized water and 20 grams of sodium hypophosphite. The contents of the flask were then heated to 90°C. The contents of the flask were then maintained at 90°C while a simultaneous cofeed of (a) a solution containing 170 grams of phosphoethylmethacrylate and 30 grams of methylmethacrylate in 50 grams of deionized water was fed to the flask at a rate of 2 ml/min; and (b) a solution containing 6 grams of ammonium persulfate in 200 grams of deionized water was fed to the flask at a rate of 2ml/min. The contents of the flask were then maintained at 90°C for 2 hours after completion of the cofeeds. The reaction yielded a final aqueous phase polymer with a solids content of 30wt%, a molecular weight of 17,900 and a T_{g} of 57°C.

### Example 8: (Treatment comprising phosphorus containing polymer with 20wt% phosphoethylmethacrylate monomer derived units)

To a 3-liter, 4 necked flask equipped with a heating mantel, stirrer, nitrogen inlet and monomer feed line inlet was added 800 grams of deionized water and 4.5 grams of 30wt% sodium lauryl ether sulfate solution in water (Disponil® FES 32 IS available from Cognis). The contents of the flask were then heated to 85°C with stirring. Upon reaching 85°C, a solution of 2.7 grams of sodium carbonate in 30 grams of deionized water and a monomer emulsion containing 22 grams of deionized water, 1.5 grams of 30wt% sodium lauryl ether sulfate solution in water (Disponil® FES 32 IS available from Cognis), 21.5 grams of butyl acrylate, 7.0 grams of methyl methacrylate and an initiator solution of 2.2 grams of ammonium persulfate in 30 grams of water was added to the flask. The contents of the flask were then maintained at 85°C for 10 minutes to create a polymer seed. A monomer emulsion containing 418 grams of deionized water, 28.5 grams of 30wt% sodium lauryl ether sulfate solution in water (Disponil® FES 32 IS available from Cognis), 408.5 grams of butyl acrylate, 164 grams of methyl methacrylate, 86 grams of hydroxyethylmethacrylate, and 172 grams ofphosphoethylmethacrylate was then added to the flask at a rate of 8.9 g/min for a period of 10 minutes and then at a rate of 20 g/min for a period of 1.5 hours. The contents of the flask were then cooled to 65°C and a solution containing 5.9 grams of a 0.015 % iron sulfate solution, 1.4 grams of 70% tert-butyl hydroperoxide dissolved in 15 grams of water and 0.8 grams of isoascorbic acid dissolved in 20 grams of water was added to the flask. The contents of the flask were then maintained at 65°C for 20 minutes. The contents of the flask were then cooled to room temperature and 12.5 grams of 28% ammonium hydroxide solution was then added. The contents of the flask were then filtered a 100 mesh nylon screen (Tyler equivalent 150 micron opening, ASTME 11 specification). The product filtrate yielded 38wt% solids with a T_{g} of -9°C.

### Example 9: (Treatment comprising phosphorus containing polymer with 12wt% phosphoethylmethacrylate monomer derived units)

To a 3-liter, 4 necked flask equipped with a heating mantel, stirrer, nitrogen inlet and monomer feed line inlet was added 500 grams of deionized water, 0.60 grams of sodium acetate and 3.3 grams of ammonium persulfate. The contents of the flask were then heated to 85°C with stirring. A monomer emulsion containing 15 grams of deionized water, 1.5 grams of a 28wt% aqueous solution of sodium lauryl sulfate, 15 grams of ethyl acrylate and 10 grams of methyl methacrylate was then added to the flask. The contents of the flask were maintained at 85°C for 10 minutes to create a polymer seed. A monomer emulsion containing 245 grams of deionized water, 32 grams of a 28wt% aqueous solution of sodium lauryl sulfate, 436 grams of ethyl acrylate, 359 grams of methyl methacrylate, 87 grams of methylol acrylamide and 120 grams of phosphoethylmethacrylate was then added to the flask at a rate of 8.6 g/min for a period of 10 minutes and then at a rate of 20 g/min for a period of 1.0 hour. A catalyst solution containing 0.9 grams of ammonium persulfate in 125.0 grams of water was added to the flask concurrently at a rate of 0.895 mL/min for a period of 10 minutes and then at a rate of 2.38 mL/min for a period of 1.0 hour. Once both feds were complete, 19.0 grams of a 70wt% aqueous solution of octylphenol ethoxylate in 300.0 grams of water was added to the flask. The contents of the flask were cooled to 65°C and a solution containing 5.7 grams of a 0.015 % iron sulfate solution, 3.2 grams of 70% tert-butyl hydroperoxide dissolved in 20.5 grams of water and 1.95 grams of sodium sulfoxylate formaldehyde dissolved in 20.5 grams of water was added to the flask over a period of 30 minutes. The contents of the flask were then cooled to room temperature. The contents of the flask were then filtered a 100 mesh nylon screen (Tyler equivalent 150 micron opening, ASTME 11 specification). The product filtrate yielded 38wt% solids with a T_{g} of 35°C.

### Examples 10-19: (Fire Retardancy Testing)

In the following fire retardancy tests, Whatman^{®} 3 cellulose filter papers were used as a test substrate. According to the procedure, the filter paper was dipped into an aqueous solution of the **Treatment** listed in **Table I** diluted to the noted **solids level** for approximately 2 minutes to provide the **Coat weight** listed in **Table I.** The filter paper was then hung to air dry overnight and then dried by heating to 150°C for 10 minutes. The resulting **Coat Weight** of **Treatment** on the filter paper substrate and the % **P** on the coated filter paper for each of **Examples 10-19** are provided in **Table I**. The fire retardancy of the filter papers prepared according to **Examples 10-19** was then tested by placing the dried filter paper in a butane flame for 10 seconds. The flame was then removed and the burn characteristics recorded in **Table I** as **Burn Results**.

**Table I**

| **Ex.** | **Treatment** | **Solids Level (in wt%)** | **Coat Weight (in wt%)** | **% P** | **Burn Results** |
|---|---|---|---|---|---|
| 10 | None | 0 | 0 | 0 | Burned Completely |
| 11 | Product Ex. 1 | 25 | 36 | 0 | Burned vigorously and completely |
| 12 | Product Ex. 2 | 10 | 19 | 0.33 | Burned slowly and completely |
| 13 | Product Ex. 3 | 25 | 40 | 1.11 | Burned very slowly leaving char |
| 14 | Product Ex. 3 | 45 | 72 | 2.3 | Self extinguished |
| 15 | Product Ex. 4 | 10 | 20 | 0.88 | Burned slowly leaving char |
| 16 | Product Ex. 5 | 10 | 22 | 1.03 | Burned slowly leaving char |
| 17 | Product Ex. 6 | 10 | 22 | 1.41 | Self extinguished |
| 18 | Product Ex. 7 | 10 | 15 | 1.97 | Self extinguished |
| 19 | Product Ex. 8 | 25 | 38 | 1.3 | Self extinguished |

### Examples 20-22: (Fire Retardancy FMVSS 302)

Examples 20-22 were performed to assess the Fire Retardancy on Automotive Polyester Upholstery Fabric per the United States Federal Motor Vehicle Safety Standard Test 302 (FMVSS 302). Under this standard, in horizontal testing a < 4 in/min burn rate is considered a pass. The **Treatment** in each of Examples 20-22 was prepared in duplicate by blending and foaming the materials listed in **Table II** to a density of 180 gm/9 oz (676 gm/L) using a KitchenAid^{®} mixer with a whip attachment. The foamed treatment was then scrape coated onto the back of polyethylene terephthalate (PET) upholstery test fabric (Collins and Aikman /Dorchester VN neutral) under tension. The test fabric was then dry/cured for 3 minutes at 325°F to provide the product treated fabric. The product treated fabric was then subjected to testing under FMVSS 302. The results of that testing is provided in **Table II.**

**Table II**

| **Ex.** | **Treatment** | **Total Weight (oz/yd²)** | **Dry Binder (oz/yd²)** | **FMVSS 302** | |
|---|---|---|---|---|---|
| | | | | **Direction/ Position** | **Rating** |
| 20 | (Comparative) | 17.2 | 2.9 | MDFD | DNI |
| | 227g product soln. of | | | CDFD | DNI |
| | Example 1 | | | | |
| | 15g ATH | 17.8 | 3.5 | MDFU CDFU | SE DNI |
| | | | | | |
| | 75g of 67.5wt% soln. in water of 2:1 wt ratio decabrom:Sb₂O₃ | | | | |
| | | | | | |
| | 3 g of 30wt% aqueous soln. of sodium lauryl sulfate | | | | |
| 21 | (Comparative) | 17.4 | 3.1 | MDFD CDFD | Fail - 8.7 in/min DNI |
| | 227g product soln. of | | | | |
| | Example 1 | 17.4 | 3.1 | MDFU | Fail - 9.3 in/min |
| | | | | CDFU | Fail - 4.1 in/min |
| | 65g ATH | | | | |
| | | | | | |
| | 3 g of 30wt% aqueous soln. of sodium lauryl sulfate | | | | |
| 22 | 170g product soln. of Example 3 | 16.7 | 2.4 | MDFD CDFD | Pass - 1.7 in/min SE/NBR |
| | | | | | |
| | 70g product soln. of Example 7 | 17.9 | 3.6 | MDFU CDFU | DNI DNI |
| | | | | | |
| | 65g ATH | | | | |
| | | | | | |
| | 3 g of 30wt% aqueous soln. of sodium lauryl sulfate | | | | |

| | | | | | |
|---|---|---|---|---|---|
| **Legend:** ATH = aluminum trihydroxide Decabrom = decabromodiphenyl ether MDFD = Machine Direction, Face Down CDFD = Cross Machine Direction, Face Down MDFU = Machine Direction, Face Up CDFU = Cross Machine Direction, Face UP DNI = Did Not Ignite SE = Self extinguish NBR = No Burn Rate | | | | | |

### Examples 23-25: (Wash Durability)

The wash durability of the treatment was tested using a home laundering method based on AATCC Test Method 124-2001. The wash durability of the treatment relates to the retention of phosphorus on the treated article following washing.

### Procedure

A 50/50 polycotton woven material was used as the substrate. The substrate was pre-washed using a single machine wash and rinse cycle. The substrate was dried using a home style tumble dryer. The substrate was then placed into an aqueous bath containing the treatment noted in **Table IV** for each of **Examples 23-27**. The material was then removed from the bath, passed through a nip roll, dried and cured by heating at 149°C for three minutes to provide treated substrates having a treatment coat weight of 31%. The treated specimens were cut to 9" x 9" dimensions. The cut edges were double stitched to minimize edge fraying. The treated substrates were then subjected to 2 or 5 wash cycles in a home style automatic washer under the conditions provided in **Table III** and one dry cycle in a home-style tumble dryer. White cotton towels, used as the ballast, were uniformly placed around the washer agitator and the treated substrates were distributed equally around the agitator and on top of the ballast. The percent phosphorus in each of the washed, treated substrates was then measured using X-Ray Fluorescence Spectroscopy (XRF).

**Table III**

| **Wash Parameters** | |
|---|---|
| | |
| Water Level | 16.6 gal (~63 L) |
| Wash Temperature | 140°F |
| Rinse Temperature | < 85°F |
| Cycle Time | 15 min. |
| Detergent* | 66 ± 0.1 g |
| Ballast** | 4.0 ± 0.13 lbs. |

| | |
|---|---|
| *Tide® powdered detergent **White cotton towels | |

**Table IV**

| **Ex.** | **Treatment** | **wt% P (0 Washes)** | **wt% P (2 Washes)** | **wt% P (5 Washes)** |
|---|---|---|---|---|
| 23 | None | 0 | 0 | 0 |
| 24 | Product of Ex. 8 diluted to 35 wt% solids | 1.230 | 0.727 | 0.550 |
| 25 | Product of Ex. 9 diluted to 35 wt% solids | 1.075 | 0.450 | 0.450 |

## Claims

1. A treated article, comprising:
a substrate having a surface, wherein the substrate is selected from a fiber, a non-woven, a textile and a paper; and
a treatment;
wherein at least a portion of the surface is treated with the treatment; wherein the treatment comprises a phosphorus containing polymer; wherein the phosphorus containing polymer comprises > 10 wt% (based on solids) of phosphorus containing monomer derived units;
with the proviso that the treatment contains > 10 wt% (based on solids) of phosphorus containing monomer derived units that are not derived from vinylphosphonic acid and with the proviso that the treated article contains at least 1wt% (based on solids) phosphorus.

2. A treated article, comprising:
a substrate having a surface, wherein the substrate is selected from a fiber, a non-woven, a textile and a paper; and
a treatment;
wherein at least a portion of the surface is treated with the treatment; wherein the treatment comprises a phosphorus containing polymer; wherein the phosphorus containing polymer comprises > 10 wt% (based on solids) of phosphorus containing monomer derived units; wherein the phosphorus containing monomer derived units are derived from monomers according to formula (I) and salts thereof, wherein formula (I) follows: 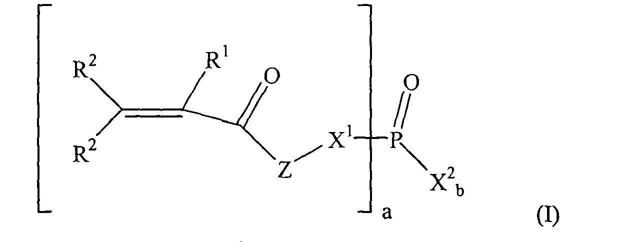 wherein **Z** is selected from O and NH; **R¹** is selected from a hydrogen, a hydrocarbyl group and a substituted hydrocarbyl group; each **R²** is independently selected from a hydrogen, a hydrocarbyl group and a substituted hydrocarbyl group; **X¹** is selected from an alkyl group; a substituted alkyl group; an alkenyl group; a substituted alkenyl group; an aryl group; a substituted aryl group and a -(C**R¹**₂)_{d}-O- group, where d is selected from 1, 2, 3 and 4; **X²** is selected from a hydrogen and a hydroxy group; **a** is selected from 1, 2 and 3; b is selected from 0, 1 and 2; and, wherein **a+b**=3; with the proviso that the treatment contains > 10 wt% (based on solids) of the phosphorus containing monomer derived units and with the proviso that the treated article contains at least 1wt% (based on solids) phosphorus.

3. The treated article of claim 2, wherein the phosphorus containing monomer derived units are derived from monomers according to formula (II) and salts thereof, wherein formula (II) follows: 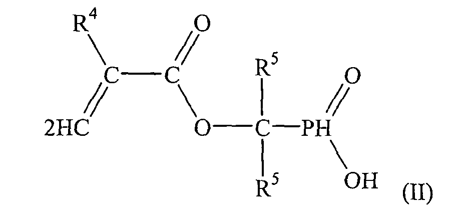 wherein **R⁴** is selected from a hydrogen and a methyl group and each occurrence of **R⁵** is independently selected from a hydrogen, a C₁₋₁₂ alkyl group, an aryl group, a substituted alkyl group and a substituted aryl group.

4. The treated article of claim 2, wherein the phosphorus containing monomer derived units are derived from phosphoethyl (meth)acrylate monomer.

5. The treated article of claim 1, wherein the treated article is wash-durable and contains greater than or equal to 0.5 wt.% phosphorus after 5 washes.

6. The treated article of one of claim 1, wherein the phosphorus containing polymer further comprises < 90 wt% (based on solids) of units derived from monomers selected from include styrene, butadiene, α-methyl styrene, vinyl toluene, vinyl naphthalene, ethylene, propylene, vinyl acetate, vinyl versatate, vinyl chloride, vinylidene chloride, acrylonitrile, methacrylonitrile, (meth) acrylamides, methylol(meth) acrylamides, various C₁-C₄₀alkyl esters of (meth)acrylic acid; for example, methyl (meth)acrylate, ethyl (meth)acrylate, n-butyl (meth)acrylate, 2-ethylhexyl (meth)acrylate, cyclohexyl (meth)acrylate, n- octyl (meth)acrylate, n-decyl (meth)acrylate, n-dodecyl (meth)acrylate, tetradecyl (meth)acrylate, lauryl (meth)acrylate, oleyl (meth)acrylate, palmityl (meth)acrylate, and stearyl (meth)acrylate; other (meth) acrylates such as isobornyl (meth)acrylate, benzyl (meth)acrylate, phenyl (meth)acrylate, 2-bromoethyl (meth)acrylate, 2-phenylethyl (meth)acrylate, and 1-naphthyl (meth)acrylate, alkoxyalkyl (meth)acrylate, such as ethoxyethyl (meth)acrylate, hydroxyalkyl(meth) acrylates such as 2-hydroxyethyl (meth)acrylate, 3-hydroxypropyl (meth) acrylate, mono-, di-, trialkyl esters of ethylenically unsaturated di- and tricarboxylic acids and anhydrides, such as ethyl maleate, dimethyl fumarate, and ethyl methyl itaconate; and carboxylic acid containing monomers such as (meth)acrylic acid, itaconic acid, fumaric acid, and maleic acid. Alternatively, the monomer includes at least one multi-ethylenically unsaturated monomer effective to raise the molecular weight and crosslink the polymer particle. Examples of multi-ethylenically unsaturated monomers that are utilizable include allyl (meth)acrylate, tripropylene glycol di(meth)acrylate, diethylene glycol di(meth)acrylate, ethylene glycol di(meth)acrylate, 1,6-hexanediol di(meth)acrylate, 1,3-butylene glycol di(meth)acrylate, polyalkylene glycol di(meth)acrylate, diallyl phthalate, trimethylolpropane tri(meth) acrylate, divinylbenzene, divinyltoluene, trivinylbenzene, and divinyl naphthalene and combinations thereof.

7. The treated article of claim 1, wherein the treatment further comprises at least one binder.

8. The treated article of claim 1, wherein the treatment further comprises an additive.

9. An item comprising a treated article of claim 1, wherein the item is selected from apparel, apparel interlining, upholstery, carpeting, padding, ceiling tiles, acoustical tiles, backing, wall coverings, roofing products, wall board, house wraps, insulation, bedding, wiping cloths, towels, gloves, rugs, floor mats, drapery, napery, textile bags, awnings, vehicle covers, boat covers, tents, agricultural coverings, geotextiles, automotive headliners, air and fluid filtration media, dust masks, fiber fill, envelopes, tags, labels, and medical care products.

10. A process for producing a treated article comprising:
providing a substrate, wherein the substrate is selected from a fiber, a non-woven, a textile and a paper;
providing a treatment comprising a phosphorus containing polymer, wherein the phosphorus containing polymer comprises >10 wt% (based on solids) of phosphorus containing monomer derived units;
treating the substrate with the treatment to produce a treated article;
with the proviso that the treatment comprises at least 10 wt% (based on solids) phosphorus containing monomer derived units that are not derived from vinylphosphonic acid and with the proviso that the treated article contains at least 1wt% (based on solids) phosphorus.
